# EUROPÄISCHE PATENTSCHRIFT

(11) **EP 1 896 809 B1**
(45) Veröffentlichungstag und Bekanntmachung des Hinweises auf die Patenterteilung: **09.09.2020**
(21) Anmeldenummer: 06753204.4
(22) Anmeldetag: 30.05.2006
(51) Int. Cl.: G01H 1/00

(54) **VERFAHREN UND VORRICHTUNG ZUR ZUSTANDSÜBERWACHUNG VON SCHIFFSANLAGEN**
METHOD AND DEVICE FOR MONITORING THE STATUS OF SHIP SYSTEMS
PROCÉDÉ ET DISPOSITIF POUR SURVEILLER L'ÉTAT D'INSTALLATIONS NAVALES

(30) Priorität: 29.06.2005 DE 102005030202
(43) Veröffentlichungstag der Anmeldung: 12.03.2008
(73) Patentinhaber: thyssenkrupp Marine Systems GmbH, 24143 Kiel (DE)
(72) Erfinder: THOMAS, Erhard, 12559 Berlin (DE)
(74) Vertreter: thyssenkrupp Intellectual Property GmbH
(86) Internationale Anmeldenummer: PCT/DE2006/000918
(87) Internationale Veröffentlichungsnummer: WO 2007/003150

(56) Entgegenhaltungen:
- WO-A-00/32458
- US-A- 5 038 616
- US-B1- 6 298 308
- US-B1- 6 301 572
- US-B2- 6 768 938
- DATABASE WPI Week 200519 Derwent Publications Ltd., London, GB; AN 2005-178677 XP002404447 & TW 220 158 B1 (UNITED SHIP DESIGN & DEV CENT) 11. August 2004 (2004-08-11)

## Beschreibung

Die Erfindung betrifft eine Einrichtung und ein Verfahren zur permanenten Zustandsüberwachung und zum Sammeln von Langzeitzustandsdaten von Schiffseinrichtungen (beides wird parallel abgearbeitet), letzteres unter während des Reisezyklus des Schiffes (Zeitraum zwischen zwei Revisionen) identischen Messbedingungen, wobei der aktuelle Zustandsparameter mit mindestens einem Zustandsparameter "Neuzustand der Einrichtung" verglichen wird und bei dem in Abhängigkeit vom durchgeführten Vergleich während der Fahrt des Schiffes ein Wartungs- oder Reparaturhinweis an die Fahrmannschaft gegeben wird, oder - vor einer Schiffsrevision, nach einem Reisezyklus des Schiffes - ein Zustandsprotokoll der Einrichtung erzeugt wird, mit dessen Hilfe eine Entscheidung über notwendige Wartungsarbeiten, Reparaturen oder Ersatz der Einrichtung möglich ist.

In US 6298308 B1 wird ein Ansatz vorgestellt, um vorausschauende Instandhaltung (predictive maintenance) an einer Anlage (site) durchzuführen, vgl. Sp. 2/Z. 34-35. Sogenannte lokale Experten (local experts) sind jeweils eine Maschine der Anlage zugeordnet und sammeln Daten über die Vibration der Maschine, vgl. Sp. 2/Z. 37 - 41. Diese Anlage (site) kann beispielsweise ein Schiff sein, vgl. Sp. 2/Z. 46. Jeder lokale Experte 16 des Ausführungsbeispiels ist ein "computer-driven data collector and analyzer".

Jeder lokale Experte in US 6298308 B1 sammelt automatisch Daten und analysiert diese. Die gesammelten und analysiert Daten stammen von einer Maschine und beziehen sich auf Vibrationen dieser Maschine, vgl. Sp. 2/Z. 38 - 41. Der lokale Experte vermag einen Alarm auszulösen und diesen an das Maschinen-Personal zu richten. Dieser Alarm kann sich auf Fehler beziehen, die bereits aufgetreten sind (impending failure), auf Verschleiß beispielsweise von Lagern sowie auf erforderliche Wartung, vgl. Sp. 2/Z. 58 - 64. Hierfür entscheidet der lokale Experte automatisch, welche Maschinen wie gefordert arbeiten oder kleine, mittlere oder gravierende Probleme aufweisen, vgl. Sp. 3 / Z. 6 - 8.

Jeder lokale Experte in US 6298308 B1 umfasst ein Expertensystem mit einer Regel-Datenbank oder einer Wissens-Datenbank. Der lokale Experte generiert einen Alarm abhängig von Ergebnissen des Expertensystems. Im Ausführungsbeispiel analysiert der lokale Experte 16 mit Regeln oder mit Wissen die Vibrationsdaten und diagnostiziert den Zustand einer Maschine 14, vgl. Sp. 5 / Z. 12 - 15.

Das Expertensystem eines lokalen Experten besitzt in einer Ausführungsform a neural network, fuzzy logic, or other adaptive and/or predictive analyzers, vgl. Sp. 5 / Z. 9 - 12. außerdem besitzt der lokale Experte 16 eine Datenbank, in der einerseits Informationen über eine bestimmte Maschine 14 gespeichert sind und andererseits eine Bibliothek von Daten von gleichartigen Maschinen, vgl. Sp. 5 / Z. 6 - 9.

In einer Ausgestaltung ist jeder lokale Experte mit einem zentralen Überwachungssystem über eine Datenverbindung verbunden. Der lokale Experte vermag Daten an eine Datenbank des zentralen Überwachungssystems zu ermitteln. Das zentralen Überwachungssystem ("central monitoring location 34") kann die übermittelten lokalen Daten auswerten, sobald ein Problem aufgetreten ist, vgl. Sp. 3/Z. 45 - 55.

Aufgabe der vorliegenden Erfindung ist es, ein Verfahren der einleitend genannten Art derart anzugeben,dass eine zuverlässige automatische Information der Fahrmannschaft bei einer Zustandsverschlechterung einer Schiffseinrichtung während der Fahrt des Schiffes bereits bei tendenzieller Annäherung an einen Gefahrengrenzwert dieser Einrichtung erfolgt.

Diese Aufgabe wird erfindungsgemäß durch ein Verfahren zur Durchführung von Wartungsarbeiten auf Schiffen gelöst. Bei dem Verfahren wird messtechnisch mindestens ein Parameter mindestens einer Einrichtung des Schiffes erfasst und mit mindestens einem Sollwert verglichen. In Abhängigkeit vom durchgeführten Vergleich wird die Durchführung eines Wartungsvorganges ausgelöst, wobei die messtechnische Erfassung des Parameters mindestens eine Körperschallmessung umfasst, wobei die Körperschalldaten mit Solldaten verglichen werden und wobei bei der Auswertung der Messdaten Zusatzinformationen aus einem Automatisierungs- und Informationssystems des Schiffes berücksichtigt werden. Mittels des Automations- und Informationssystems des Schiffs wird auf den gesamten Signalvorrat des Schiffs hinsichtlich des Schiffsbetriebszustandes und des Betriebszustandes der zu messenden Schiffseinrichtungen zugegriffen, wobei eine Zustandsmessung an einer Schiffseinrichtung nur dann vorgenommen wird, wenn der Betriebszustand des Schiffes und der Betriebszustand der zu messenden Schiffseinrichtung mit einem vorgegebenen NormMesszustand übereinstimmen.

Beispielsweise werden mit den zur Beurteilung des Zustandes einer Schiffseinrichtung gesammelten Körperschall-, Raumschall- oder Orbitmesswerten (Orbit = Bewegungsbahn eines Rotors im Lager) Trendberechnungen zur Verschleiß- oder Schadensentwicklung in den nächsten Monaten des Fahrbetriebs durchgeführt und Vergleiche mit den Gefahrengrenzwerten der Schiffseinrichtung vorgenommen. Ist im Zeitraum der nächsten Monate eine tendenzielle Annäherung der Zustandsparameter an den Gefahrengrenzwert zu erwarten, wird die Fahrmannschaft zur prognostischen Wartung oder Reparatur aufgefordert.

Eine weitere Aufgabe der vorliegenden Erfindung ist es, vor einer Schiffsrevision, nach mehrjähriger Fahrt des Schiffes, ein Zustandsprotokoll der von der Vorrichtung überwachten Schiffseinrichtungen zu erzeugen, das eine Entscheidung ermöglicht, ob eine bestimmte Einrichtung weiter betrieben werden kann, repariert oder ausgewechselt werden muss.

Diese Aufgabe wird erfindungsgemäß durch eine Vorrichtung zur Koordinierung der Durchführung von Wartungsarbeiten auf Schiffen gelöst. Die Vorrichtung weist mindestens einen Sensor zur Erfassung eines Zustandsparameters einer Einrichtung des Schiffes und eine Auswertungseinrichtung zum Vergleich des messtechnisch erfassten Zustandsparameters mit mindestens einem Sollwert auf. Eine Einrichtung zur Signalisierung einer erforderlichen Durchführung eines Wartungsvorganges in Abhängigkeit von der Messwertauswertung ist vorgesehen. Der Sensor ist zur Körperschallmessung ausgebildet. Die Auswertungseinrichtung ist an ein Automatisierungs- und Informationssystem des Schiffes angeschlossen, worüber die Vorrichtung auf den gesamten Signalvorrat des Schiffs hinsichtlich des Schiffsbetriebszustandes und des Betriebszustandes der zu messenden Schiffseinrichtungen zugreift, wobei eine Zustandsmessung an einer Schiffseinrichtung nur dann vorgenommen wird, wenn der Betriebszustand des Schiffes und der Betriebszustand der zu messenden Schiffseinrichtung mit einem vorgegebenen Norm-Messzustand übereinstimmen.

Beispielsweise ist die Vorrichtung passiv und aktiv über eine Schnittstelle mit dem Automations-/Informationssystem des Schiffes gekoppelt, sodass damit auf den gesamten Signalvorrat des Schiffes hinsichtlich des Schiffsbetriebszustandes (Anzahl und Art der laufenden Antriebe und Hilfseinrichtungen, deren Drehzahlen usw.) und auch hinsichtlich des Betriebszustandes der zu messenden Schiffseinrichtungen (Drehzahlen von Getriebewellen, Öltemperaturen usw.) zugegriffen werden kann.

Damit wird gewährleistet, dass Zustandsmessungen an einer Schiffseinrichtung von der Vorrichtung nur dann vorgenommen werden, wenn sich der Betriebszustand des Schiffes und der zu messenden Schiffseinrichtung mit einem softwareseitig vorgegebenen "Normmesszustand" innerhalb gewisser Bandbreiten von Abweichungen übereinstimmen. Damit wird die Vergleichbarkeit zeitlich weit auseinander liegender Messungen gesichert. Diese Vergleichbarkeit der Zustandsmessungen ist Grundvoraussetzung für treffsichere Zustandsdiagnosen.

Eine weitere Aufgabe der vorliegenden Erfindung bei permanenter Zustandsüberwachung ist es, der Fahrmannschaft des Schiffes bei Annäherung an einen Gefahrengrenzwert einer Schiffseinrichtung neben der Anzeige dieser Annäherung außerdem Hinweise auf mögliche Ursachen dieser Zustandsverschlechterung zu geben.

Diese Aufgabe wird erfindungsgemäß durch ein Verfahren zur permanenten Überwachung von Anlagenzustände auf Schiffen gelöst. Bei dem Verfahren wird messtechnisch mindestens ein Zustandsparameter mindestens einer Einrichtung des Schiffes erfasst und mit mindestens einem Sollwert verglichen. Es wird auf den gesamten Signalvorrat des Schiffs hinsichtlich des Schiffsbetriebszustandes und des Betriebszustandes der zu messenden Schiffseinrichtungen zugegriffen, wobei eine Zustandsmessung an einer Schiffseinrichtung nur dann vorgenommen wird, wenn der Betriebszustand des Schiffes und der Betriebszustand der zu messenden Schiffseinrichtung mit einem vorgegebenen Norm-Messzustand übereinstimmen. Bei Zustandsverschlechterung der überwachten Einrichtung wird die Fahrmannschaft bereits vor dem Erreichen von Gefahrengrenzwerten zu Wartung oder Reparatur aufgefordert.

Beispielsweise sind die Messwerte über das weitere anlagentechnische Umfeld der gefährdeten Schiffseinrichtung im Automations-/ Informationssystem des Schiffes aussagefähig. Die Messwerte werden von der Vorrichtung übernommen und mit der Zielstellung analysiert, ob sich aus deren Größe oder Veränderung Rückschlüsse auf primäre oder sekundäre Ursachen der betreffenden Zustandsverschlechterung ziehen lassen.

Ist das der Fall, wird ein Ursachenhinweis mit Vorschlägen zu Wartung oder Reparatur an die Fahrmannschaft erzeugt. Wird - als Beispiel - ein erhöhter Schwingungspegel an einem Lager einer Propellerwelle von der Vorrichtung festgestellt, so können die aus dem Autornations/Informationssystem des Schiffes von der Vorrichtung angeforderten Messwerte der Öltemperaturen, der Differenzdrücke der dem Lager vorgeschalteten Ölfilter oder Füllstandsanzeige von Öltanks von der Vorrichtung zu Hinweisen an die Fahrmannschaft für mögliche Ursachen der Zustandsverschlechterung genutzt werden.

Ferner kann, allgemein bei Messungen an Schiffseinrichtungen, die unter bestimmten Messbedingungen hinsichtlich des Betriebszustandes der zu messenden Einrichtung und des Betriebszustandes des Schiffes stattfinden sollen (zum Beispiel bei Probefahrten), der gesamte Messablauf und die Auswertung der Messung komplett automatisiert ohne Anwesenheit von Messpersonal durchgeführt werden.

Dies kann derart realisiert werden, dass in der Vorrichtung die genannten Messbedingungen (Schiffs- und Anlagenbetriebszustand) gespeichert werden. Stellt die Vorrichtung vermittels der Verbindung zum Automations-/ Informationssystem des Schiffes mittels der von dort im Takt von einigen Minuten übernommenen Messwerte fest, dass der Betriebszustand des Schiffes und der Schiffseinrichtungen mit den vorgegebenen Messbedingungen übereinstimmen, so werden die zu den zu messenden Schiffseinrichtungen gehörenden Messketten aktiviert, die Messwerte werden in einem Datenbanksystem abgelegt und anschließend graphisch ausgewertet.

In den Zeichnungen Fig. 1 bis Fig. 4 sind Ausführungsbeispiele der Erfindung schematisch dargestellt. Es zeigen:
- Fig. 1: ein schematisches Ablaufdiagramm der Grobstruktur des Teils "Datensammeln" der Einrichtung
- Fig. 2: ein schematisches Ablaufdiagramm der Grobstruktur des Teils "Analyse/Diagnose" der Einrichtung,
- Fig. 3: ein kommentiertes Ablaufdiagramm des Teils "Datensammeln" der Einrichtung (Erläuterungen anhand der Ziffern im Text)
- Fig. 4: ein kommentiertes Ablaufdiagramm des Teils "Analyse/Diagnose" der Einrichtung (Erläuterungen anhand der Ziffern im Text)

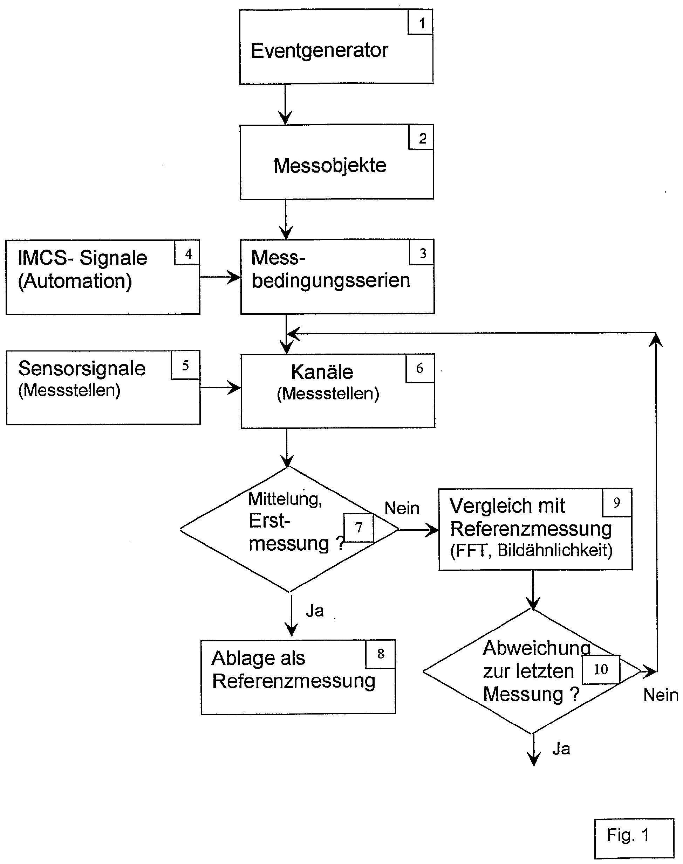

Fig. 1 veranschaulicht schematisch den Verfahrensablauf des Teils "Langzeitzustandsdatensammeln" der Einrichtung. Ein Eventgenerator (1) startet in vorgegebenen Zeitabständen für eine vorgegebene Liste von Messobjekten (Messobjekt = Schiffsanlage) (2) Anfragen an das Informations-/Automatisierungssystem (IMCS, 4) des Schiffes, übernimmt von dort Signale zum Schiffsbetriebs- und Messobjektszustand und testet die übernommenen Signale, ob sie mit einem der für dieses Messobjekt in der Software vorgegebenen Messbedingungen (3), d.h. mit vorgegebenen Betriebszuständen von Schiff und Messobjekt übereinstimmen. Ist das der Fall, wird die Messkette für dieses Messobjekt (5, 6) aktiviert und die Messwerte werden von der Vorrichtung übernommen. Ist die Messung die Erstmessung (7) des Messobjektes, wird sie als Referenzmessung ("Neuzustand") des Messobjektes für spätere Vergleiche mit aktuellen Messungen abgelegt. Handelt es sich um eine Folgemessung des Messobjektes, so erfolgt nach einer Bearbeitung der Messwerte (z.B. Fast Fourier Transformation, 9) ein Vergleich mit der Referenzmessung (10). Werden Zustandsveränderungen des Messobjektes festgestellt, so wird die Messung in einer Datenbank abgelegt und - falls Anzeichen für eine Schädigung oder Annäherung an einen Gefahrengrenzwert vorliegen - der Teil "Analyse/Diagnose" der Einrichtung gestartet und eine Information für Wartung oder Reparatur des Messobjektes an die Fahrmannschaft gegeben.

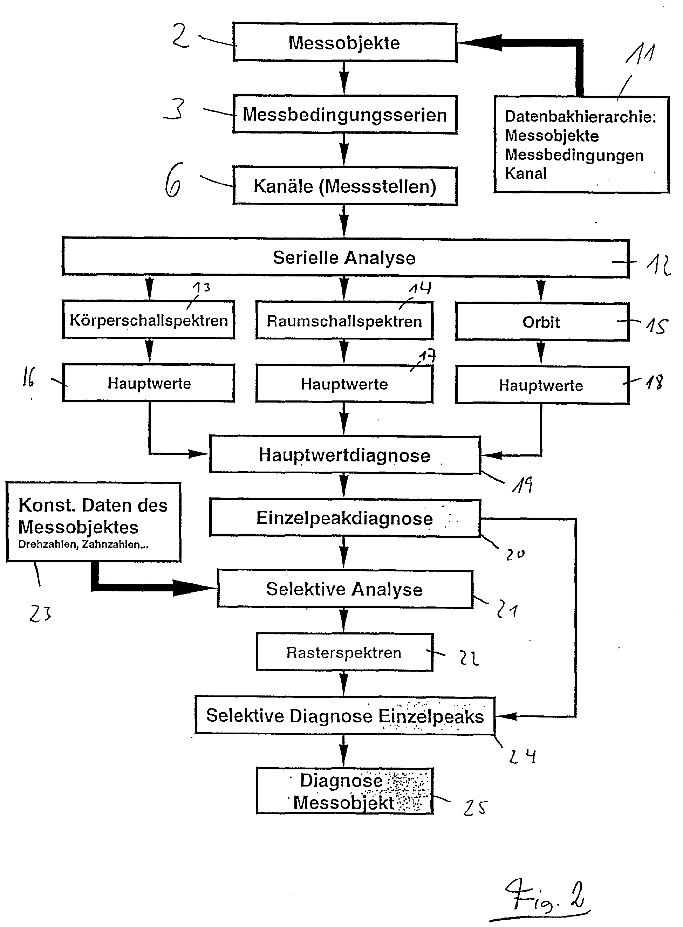

Fig. 2 zeigt schematisch den Ablauf des Teils "Analyse/Diagnose" der Einrichtung für den Anwendungsfall "Zustandseinschätzung aller beobachteten Schiffseinrichtungen = Messobjekte vor einer Schiffsrevision". In der Hierarchie: alle Messobjekte (2) / alle Messbedingungen (3) / alle Messstellen (6) wird zunächst eine serielle Analyse (12) der in der Datenbank während des Reisezyklus des Schiffes gesammelten Körperschall- (13) und Raumschallspektren (14) oder Orbitmessungen (Orbit bedeutet eine zweidimensionale Bahnkurve, mit der ein Oberflächenpunkt einer Anlage schwingt oder die ein Rotor in einem Gleitlager innerhalb des Lagerspiels beschreibt, 15) nach bestimmten Hauptwerten (16, 17, 18) der Spektren wie (Beispiele):
- Effektivwert der Schwinggeschwindigkeit
- Maximale Schwinggeschwindigkeit
- Frequenzlage des Maximalwertes der Schwinggeschwindigkeit
- der Bildähnlichkeit des Schwinggeschwindigkeitsspektrums zur Referenzmessung
- Orbitmessungen
- Phasenlage des Orbit
- Orbitform (Schlingenbildung?)
vorgenommen. Anhand dieser Hauptwerte wird eine Hauptwertdiagnose (19) des Messobjektes für eine Messbedingungsserie computergestützt erzeugt. Werden hierbei Schädigungen oder Verschleiß des Messobjektes nach einer Trendberechnung festgestellt, werden die Spektren spezieller daraufhin analysiert, welche Schwinggeschwindigkeitsspitzen sich bei welcher Frequenz während des Messzeitraumes in ihrer Größe und Frequenzlage signifikant verändert haben. Die daraus gewonnenen Erkenntnisse zu Ursache und Entwicklung der Schädigung werden für das Messobjekt in einer Einzelpeakdiagnose (20) formuliert. Sind die Ergebnisse nicht eindeutig, kann im Dialog mit der Einrichtung eine selektive Analyse (21) angeschlossen werden. In diesem Analyse-/ Diagnoseteil der Einrichtung wird mit Hilfe konstruktiver oder betriebsspezifischer Daten des Messobjektes wie Betriebsdrehzahlen, Zahnzahlen bei Getrieberädern, Wälzkörperanzahlen bei Wälzlagern usw., die in der Datei des Messobjektes enthalten sind, ein Raster möglicher Anregungsfrequenzen erzeugt werden (22). Die gemessenen Spektren werden nun daraufhin untersucht, ob markante, für die erkannte Schädigung signifikante Schwinggeschwindigkeitsspitzen der gemessenen Spektren mit diesen Rasterfrequenzen übereinstimmen (24). Ist das der Fall, können Hinweise auf die Schädigungsart (bei Schiffsrevision) oder zu Wartungsmaßnahmen während der Fahrt des Schiffes abgeleitet werden. Abschließend werden alle Untersuchungsergebnisse in einer Diagnose Messobjekt zusammengefasst.

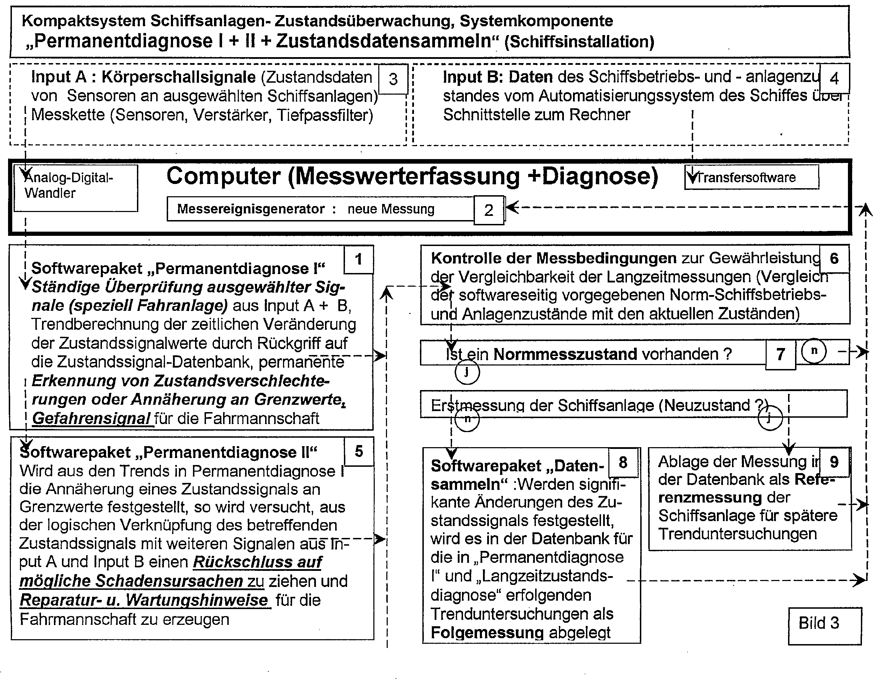

Fig. 3 zeigt als Übersichtsschaubild den Ablauf für die Zustandsüberwachung bei gleichzeitiger Permanentdiagnose und dem Sammeln von Zustandsdaten.

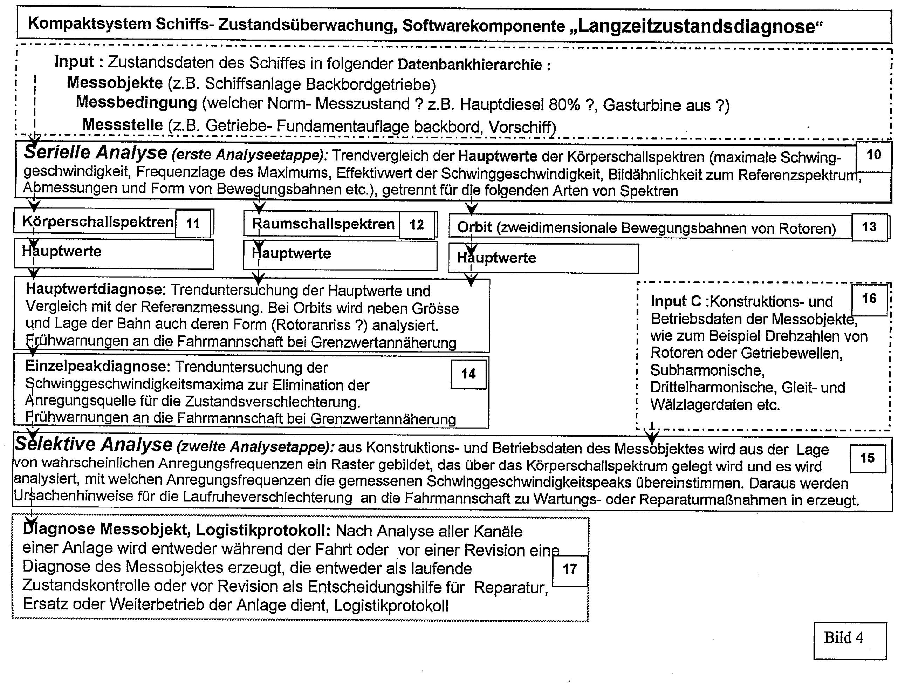

Fig. 4 veranschaulicht für die Zustandsüberwachung des Schiffes den Ablauf der Langzeitzustandsdiagnose.

## Patentansprüche

1. Verfahren zur Durchführung von Wartungsarbeiten auf Schiffen, bei dem messtechnisch mindestens ein Parameter mindestens einer Einrichtung des Schiffes erfasst und mit mindestens einem Sollwert verglichen wird und bei dem in Abhängigkeit vom durchgeführten Vergleich die Durchführung eines Wartungsvorganges ausgelöst wird, wobei die messtechnische Erfassung des Parameters mindestens eine Körperschallmessung umfasst, wobei die Körperschalldaten mit Solldaten verglichen werden und wobei bei der Auswertung der Messdaten Zusatzinformationen aus einem Automatisierungs- und Informationssystems des Schiffes berücksichtigt werden, **dadurch gekennzeichnet, dass** mittels des Automationsund Informationssystem des Schiffs auf den gesamten Signalvorrat des Schiffs hinsichtlich des Schiffsbetriebszustandes und des Betriebszustandes der zu messenden Schiffseinrichtungen zugegriffen wird, wobei eine Zustandsmessung an einer Schiffseinrichtung nur dann vorgenommen wird, wenn der Betriebszustand des Schiffes und der Betriebszustand der zu messenden Schiffseinrichtung mit einem vorgegebenen NormMesszustand übereinstimmen.

2. Verfahren nach Anspruch 1, **dadurch gekennzeichnet, dass** Raumschallmesswerte ausgewertet werden.

3. Verfahren nach Anspruch 1, **dadurch gekennzeichnet, dass** Bewegungsbahnmesswerte ausgewertet werden.

4. Verfahren nach einem der Ansprüche 1 bis 3, **dadurch gekennzeichnet, dass** eine Permanentdiagnose der mindestens einen Schiffseinrichtung durchgeführt wird.

5. Verfahren nach einem der Ansprüche 1 bis 4, **dadurch gekennzeichnet, dass** Langzeitzustandsdaten gesammelt werden.

6. Verfahren nach Anspruch 5, **dadurch gekennzeichnet, dass** Trenduntersuchungen durchgeführt werden.

7. Verfahren nach einem der Ansprüche 5 oder 6, **dadurch gekennzeichnet, dass** eine Langzeitdiagnose durchgeführt wird.

8. Verfahren nach einem der Ansprüche 1 bis 7, **dadurch gekennzeichnet, dass** eine selektive Analyse durch Frequenzraster durchgeführt wird.

9. Verfahren nach einem der Ansprüche 1 bis 8, **dadurch gekennzeichnet, dass** ein Schwinggeschwindigkeitsspektrum ausgewertet wird.

10. Verfahren nach einem der Ansprüche 1 bis 9, **dadurch gekennzeichnet, dass** eine Zustandsdatenerfassung in einem Zeitraster von etwa fünf Minuten durchgeführt wird.

11. Vorrichtung zur Koordinierung der Durchführung von Wartungsarbeiten auf Schiffen, die mindestens einen Sensor zur Erfassung eines Zustandsparameters einer Einrichtung des Schiffes aufweist, wobei der Sensor zur Körperschallmessung ausgebildet ist und die eine Auswertungseinrichtung zum Vergleich des messtechnisch erfassten Zustandsparameters mit mindestens einem Sollwert aufweist und bei der eine Einrichtung zur Signalisierung einer erforderlichen Durchführung eines Wartungsvorganges in Abhängigkeit von der Messwertauswertung vorgesehen ist, **dadurch gekennzeichnet, dass** die Auswertungseinrichtung an ein Automatisierungs- und Informationssystem des Schiffes angeschlossen ist und darüber auf den gesamten Signalvorrat des Schiffs hinsichtlich des Schiffsbetriebszustandes und des Betriebszustandes der zu messenden Schiffseinrichtungen zugreift, wobei eine Zustandsmessung an einer Schiffseinrichtung nur dann vorgenommen wird, wenn der Betriebszustand des Schiffes und der Betriebszustand der zu messenden Schiffseinrichtung mit einem vorgegebenen Norm-Messzustand übereinstimmen.

12. Verfahren zur permanenten Überwachung von Anlagenzustände auf Schiffen, bei dem messtechnisch mindestens ein Zustandsparameter mindestens einer Einrichtung des Schiffes erfasst und mit mindestens einem Sollwert verglichen wird, **dadurch gekennzeichnet, dass** auf den gesamten Signalvorrat des Schiffs hinsichtlich des Schiffsbetriebszustandes und des Betriebszustandes der zu messenden Schiffseinrichtungen zugegriffen wird, wobei eine Zustandsmessung an einer Schiffseinrichtung nur dann vorgenommen wird, wenn der Betriebszustand des Schiffes und der Betriebszustand der zu messenden Schiffseinrichtung mit einem vorgegebenen Norm-Messzustand übereinstimmen, und dass bei Zustandsverschlechterung der überwachten Einrichtung die Fahrmannschaft bereits vor dem Erreichen von Gefahrengrenzwerten zu Wartung oder Reparatur aufgefordert wird.

13. Verfahren nach Anspruch 12, **dadurch gekennzeichnet, dass** bei Zustandsverschlechterung einer Anlage der Einrichtung mittels der Verbindung der Vorrichtung zum Automations- / Informationssystem des Schiffes weitere, sich auf das anlagentechnische Umfeld der betreffenden Anlage beziehende Messwerte aus dem Automations- / Informationssystem übernommen und daraus Hinweise an die Fahrmannschaft zu wahrscheinlichen primären oder sekundären Ursachen dieser Zustandsverschlechterung gegeben werden.

14. Verfahren nach Anspruch 12 oder 13, **dadurch gekennzeichnet, dass** Langzeitzustandsdaten gesammelt werden und um die Vergleichbarkeit der Zustandsdaten der beobachteten Schiffseinrichtungen über Zeiträume von Jahren zu gewährleisten, mittels der Verbindung der Vorrichtung zum Automations- / Informationssystem nur dann Langzeitzustandsmessungen und -datensammlungen an den zu beobachteten Schiffseinrichtungen erfolgen, wenn die Schiffsbetriebsbedingungen und die Betriebszustände der Schiffseinrichtungen mit softwareseitig vorgegebenen "Normmesszuständen" übereinstimmen.

15. Verfahren nach Anspruch 12, 13 und 14, **dadurch gekennzeichnet, dass** jedwede Messungen zur Kontrolle des Zustandes der Schiffseinrichtungen oder Messungen bei Probefahrten, die unter bestimmten Bedingungen des Schiffsbetriebs und der zu messenden Schiffseinrichtung stattfinden sollen, ohne manuellen Zugriff automatisiert werden, wobei die Vorrichtung mittels ihrer Verbindung zum Automations- / Informationssystem durch die Übernahme der Betriebszustandsdaten von Schiff und Schiffseinrichtung selbständig erkennt, wann die gewünschten Messbedingungen vorhanden sind, dann die Messkette der zu messenden Einrichtung aktiviert und die Messdaten in einer Datenbank ablegt.

16. Verfahren nach einem der Ansprüche 12 bis 15, **dadurch gekennzeichnet, dass** Orbits, das sind zweidimensionale Bewegungsbahnen von Oberflächenpunkten der Messobjekte oder Bewegungsbahnen von Rotoren in Gleitlagern, ausgewertet werden.

17. Verfahren nach Anspruch 14, **dadurch gekennzeichnet, dass** die Messung der Langzeitzustandsdaten nur unter definierten Schiffsbetriebszuständen und Betriebszuständen der betreffenden Schiffseinrichtung erfolgt.

18. Verfahren nach einem der Ansprüche 12 bis 17, **dadurch gekennzeichnet, dass** bei einer während der Fahrt des Schiffes auftretenden Zustandsverschlechterung einer Anlage der Einrichtung durch Trenduntersuchungen aus den gesammelten Zustandsdaten eine Prognose der Schadensentwicklung in nächster Zeit durchgeführt wird, um die Restlebensdauer der Anlage bis zum Ausfall abzuschätzen.

19. Verfahren nach Anspruch 14, **dadurch gekennzeichnet, dass** mit den unter Anspruch 17 gesammelten Zustandsdaten vor einer Schiffsrevision eine Langzeitdiagnose der Schiffseinrichtung dergestalt vorgenommen wird, sodass eine Einschätzung möglich ist, ob an einer beobachteten Anlage der Einrichtung des Schiffes Wartungs- oder Reparaturarbeiten durchgeführt werden müssen, die Anlage ersetzt werden muss oder bis zur nächsten Revision ohne Eingriff weiter betrieben werden kann.

20. Verfahren nach einem der Ansprüche 12 bis 19, **dadurch gekennzeichnet, dass** eine Zustandsanalyse einer Schiffsanlage der Einrichtung des Schiffes in zwei Etappen durchgeführt wird, dergestalt, dass in einer ersten seriellen Etappe Hauptwerte der Körperoder Raumschallspektren oder der Orbits der Schiffsanlage auf Schädigungsanzeichen untersucht werden und wobei in einer zweiten selektiven Etappe aus konstruktiven und/oder Betriebsdaten der Anlage ein Frequenzraster möglicher Anregungsfrequenzen gebildet wird, in deren Umgebung die Suche nach Schädigungsanzeichen fortgesetzt und verfeinert wird.

21. Verfahren nach einem der Ansprüche 12 bis 20, **dadurch gekennzeichnet, dass** Schwinggeschwindigkeitsspektren ausgewertet werden.

22. Verfahren nach einem der Ansprüche 12 bis 21, **dadurch gekennzeichnet, dass** Sensoren zur Messung des Körper- und Raumschalls sowie zur Messung von Orbits eingesetzt werden und dass eine Auswertungseinrichtung an ein Automatisierungs- und Informationssystem des Schiffes angeschlossen wird.

## Claims

1. Method for performing maintenance work on ships, in which at least one parameter for at least one outfitting of the ship is captured by measurement and compared with at least one setpoint value and in which the comparison performed is taken as a basis for triggering performance of a maintenance process, wherein the capture of the parameter by measurement comprises at least one structure-borne sound measurement, wherein the structure-borne sound data are compared with setpoint data and wherein the evaluation of the measurement data involves additional information from an automation and information system of the ship being taken into consideration, **characterized in that** the automation and information system of the ship is used to access the entire signal inventory of the ship in respect of the ship's operating state and the operating state of the ship's outfittings that are to be tested, wherein a state measurement is performed on a ship's outfitting only if the operating state of the ship and the operating state of the ship's outfitting to be tested are concordant with a prescribed normal measurement state.

2. Method according to Claim 1, **characterized in that** spatial sound measured values are evaluated.

3. Method according to Claim 1, **characterized in that** path-of-movement measured values are evaluated.

4. Method according to one of Claims 1 to 3, **characterized in that** a constant diagnosis for the at least one ship's outfitting is performed.

5. Method according to one of Claims 1 to 4, **characterized in that** long-term state data are collected.

6. Method according to Claim 5, **characterized in that** trend examinations are performed.

7. Method according to either of Claims 5 and 6, **characterized in that** a long-term diagnosis is performed.

8. Method according to one of Claims 1 to 7, **characterized in that** a selective analysis by means of frequency step width is performed.

9. Method according to one of Claims 1 to 8, **characterized in that** an oscillation rate spectrum is evaluated.

10. Method according to one of Claims 1 to 9, **characterized in that** a state data capture is performed in a time frame of approximately five minutes.

11. Apparatus for coordinating the performance of maintenance work on ships, which has at least one sensor for capturing a state parameter of an outfitting of the ship, wherein the sensor is designed for structure-borne sound measurement, and which has an evaluation device for comparing the state parameter captured by measurement with at least one setpoint value and in which there is provision for a device for signalling the need for performance of a maintenance process on the basis of the measured value evaluation, **characterized in that** the evaluation device is connected to an automation and information system of the ship and uses it to access the entire signal inventory of the ship in respect of the ship's operating state and the operating state of the ship's outfittings that are to be tested, wherein a state measurement is performed on a ship's outfitting only if the operating state of the ship and the operating state of the ship's outfitting to be tested are concordant with a prescribed normal measurement state.

12. Method for constantly monitoring plant states on ships, in which at least one state parameter for at least one outfitting of the ship is captured by measurement and compared with at least one setpoint value, **characterized in that** the entire signal inventory of the ship is accessed in respect of the ship's operating state and the operating state of the ship's outfittings that are to be tested, wherein a state measurement is performed on a ship's outfitting only if the operating state of the ship and the operating state of the ship's outfitting to be tested are concordant with a prescribed normal measurement state, and **in that** worsening of the state of the monitored outfitting results in the operating crew being called on for maintenance or repair even before danger limit values are reached.

13. Method according to Claim 12, **characterized in that** worsening of the state of a plant of the outfitting results in the connection of the apparatus to the automation/information system of the ship being used to transfer further measured values relating to the plant environment of the relevant plant from the automation/information system, and advice to the operating crew in regard to probable primary or secondary causes of this worsening of the state being provided therefrom.

14. Method according to Claim 12 or 13, **characterized in that** long-term state data are collected and, in order to ensure the comparability of the state data of the observed ship's outfittings over periods of years, the connection of the apparatus to the automation/information system is used to effect long-term state measurements and data collections on the ship's outfittings that are to be observed only if the ship's operating conditions and the operating states of the ship's outfittings are concordant with "normal measurement states" prescribed by software.

15. Method according to Claims 12, 13 and 14, **characterized in that** any measurements for monitoring the state of the ship's outfittings or measurements during shakedown cruises, which are supposed to take place under specific conditions of ship's operation and of the ship's outfitting that is to be tested, are automated without manual access, wherein the apparatus uses its connection to the automation/information system, by means of the transfer of the operating state data from the ship and the ship's outfitting, to independently detect when the desired measurement conditions are available, then activates the measurement chain of the outfitting that is to be tested and stores the measurement data in a database.

16. Method according to one of Claims 12 to 15, **characterized in that** orbits, that is to say twodimensional paths of movement of surface points of the measurement objects or paths of movement of rotors in sliding bearings, are evaluated.

17. Method according to Claim 14, **characterized in that** the long-term state data are measured only under defined ship's operating states and operating states of the relevant ship's outfitting.

18. Method according to one of Claims 12 to 17, **characterized in that** worsening of the state of a plant of the outfitting that occurs while the ship is cruising results in trend examinations from the collected state data being used to make a forecast of the progress of damage in the period ahead in order to estimate the remaining life of the plant before it fails.

19. Method according to Claim 14, **characterized in that** the state data collected under Claim 17 are used prior to a ship's audit to perform a long-term diagnosis for the ship's outfitting such that an assessment is possible of whether maintenance or repair work needs to be performed on an observed plant of the outfitting of the ship, the plant needs to be replaced or it can continue to be operated without intervention until the next audit.

20. Method according to one of Claims 12 to 19, **characterized in that** a state analysis of a ship's plant of the outfitting of the ship is performed in two steps such that, in a first serial step, main values of the structure-borne or spatial sound spectra or of the orbits of the ship's plant are examined for signs of damage and wherein, in a second selective step, design and/or operating data of the plant are used to form a frequency step width of possible excitation frequencies, in the surroundings of which the search for signs of damage is continued and refined.

21. Method according to one of Claims 12 to 20, **characterized in that** oscillation rate spectra are evaluated.

22. Method according to one of Claims 12 to 21, **characterized in that** sensors for measuring the structure-borne and spatial sound and for measuring orbits are used and **in that** an evaluation device is connected to an automation and information system of the ship.

## Revendications

1. Procédé pour réaliser des travaux de maintenance sur des navires, avec lequel au moins un paramètre d'au moins un dispositif du navire est acquis par métrologie et comparé avec au moins une valeur de consigne et avec lequel la réalisation d'une opération de maintenance est déclenchée en fonction de la comparaison effectuée, l'acquisition par métrologie du paramètre comprenant au moins une mesure de bruit de structure, les données de bruit de structure étant comparées avec des données de consigne et des informations supplémentaires issues d'un système d'automatisation et d'information du navire étant prises en compte lors de l'interprétation des données de mesure, **caractérisé en ce qu'**un accès à l'ensemble de la réserve de signaux du navire concernant l'état opérationnel du navire et l'état opérationnel des dispositifs de navire à mesurer est effectué au moyen du système d'automatisation et d'information, une mesure d'état au niveau d'un dispositif de navire n'étant réalisée que lorsque l'état opérationnel du navire et l'état opérationnel du dispositif de navire à mesurer coïncident avec un état de mesure normalisé prédéfini.

2. Procédé selon la revendication 1, **caractérisé en ce que** des valeurs mesurées de bruit ambiant sont interprétées.

3. Procédé selon la revendication 1, **caractérisé en ce que** des valeurs mesurées de trajectoire de déplacement sont interprétées.

4. Procédé selon l'une des revendications 1 à 3, **caractérisé en ce qu'**un diagnostic permanent de l'au moins un dispositif de navire est réalisé.

5. Procédé selon l'une des revendications 1 à 4, **caractérisé en ce que** des données d'état à long terme sont collectées.

6. Procédé selon la revendication 5, **caractérisé en ce que** des analyses de tendance sont réalisées.

7. Procédé selon l'une des revendications 5 ou 6, **caractérisé en ce qu'**un diagnostic à long terme est réalisé.

8. Procédé selon l'une des revendications 1 à 7, **caractérisé en ce qu'**une analyse sélective par une grille de fréquences est réalisée.

9. Procédé selon l'une des revendications 1 à 8, **caractérisé en ce qu'**un spectre de vitesse d'oscillation est interprété.

10. Procédé selon l'une des revendications 1 à 9, **caractérisé en ce qu'**une acquisition de données d'état est réalisée dans une grille temporelle d'environ cinq minutes.

11. Arrangement de coordination de la réalisation de travaux de maintenance sur des navires, lequel possède au moins un capteur destiné à acquérir un paramètre d'état d'un dispositif du navire, le capteur étant configuré pour la mesure de bruit de structure, et lequel possède un dispositif d'interprétation destiné à comparer le paramètre d'état acquis par métrologie avec au moins une valeur de consigne et avec lequel est prévu un dispositif destiné à la signalisation d'une réalisation nécessaire d'une opération de maintenance en fonction de l'interprétation de la valeur mesurée, **caractérisé en ce que** le dispositif d'interprétation est raccordé à un système d'automatisation et d'information du navire et accède par le biais de celui-ci à l'ensemble de la réserve de signaux du navire concernant l'état opérationnel du navire et l'état opérationnel des dispositifs de navire à mesurer, une mesure d'état au niveau d'un dispositif de navire n'étant réalisée que lorsque l'état opérationnel du navire et l'état opérationnel du dispositif de navire à mesurer coïncident avec un état de mesure normalisé prédéfini.

12. Procédé de surveillance permanente d'état d'installations sur des navires, avec lequel au moins un paramètre d'état d'au moins un dispositif du navire est acquis par métrologie et comparé avec au moins une valeur de consigne, **caractérisé en ce qu'**un accès à l'ensemble de la réserve de signaux du navire concernant l'état opérationnel du navire et l'état opérationnel des dispositifs de navire à mesurer est effectué, une mesure d'état au niveau d'un dispositif de navire n'étant réalisée que lorsque l'état opérationnel du navire et l'état opérationnel du dispositif de navire à mesurer coïncident avec un état de mesure normalisé prédéfini, et **en ce que** dans le cas d'une dégradation de l'état du dispositif surveillé, l'équipage navigant est invité à procéder à une maintenance ou une réparation déjà avant d'atteindre des valeurs limites dangereuses.

13. Procédé selon la revendication 12, **caractérisé en ce que** dans le cas d'une dégradation de l'état d'une installation du dispositif, des valeurs mesurées supplémentaires, se rapportant à l'environnement technique d'installation de l'installation concernée, sont récupérées auprès du système d'automatisation/information au moyen de la liaison de l'arrangement avec le système d'automatisation/information du navire, et des consignes sont données à partir de celles-ci à l'équipage navigant concernant les causes primaires ou secondaires probables de cette dégradation de l'état.

14. Procédé selon la revendication 12 ou 13, **caractérisé en ce que** des données d'état à long terme sont collectées et, en vue de garantir l'aptitude à la comparaison des données d'état des dispositifs de navire observés sur des périodes de plusieurs années, des mesures d'état à long terme et des collectes de données à long terme au niveau des dispositifs de navire à observer ne sont effectuées au moyen de la liaison de l'arrangement avec le système d'automatisation/information que si les conditions opérationnelles du navire et les états opérationnels des dispositifs de navire coïncident avec des « états de mesure normalisés » prédéfinis par logiciel.

15. Procédé selon les revendications 12, 13 et 14, **caractérisé en ce que** toutes les mesures destinées au contrôle de l'état des dispositifs de navire ou les mesures lors des essais de déplacement qui doivent avoir lieu dans des conditions déterminées de l'exploitation du navire ou du dispositif de navire à mesurer sont automatisées sans intervention manuelle, l'arrangement reconnaissant automatiquement, au moyen de sa liaison avec le système d'automatisation/information par la récupération des données d'état opérationnel du navire et du dispositif de navire, à quel moment les conditions de mesure souhaitées sont présentes, activant alors la chaîne de mesure du dispositif à mesurer et enregistrant les données mesurées dans une base de données.

16. Procédé selon l'une des revendications 12 à 15, **caractérisé en ce que** des orbites, c'est-à-dire des trajectoires de déplacement bidirectionnelles de points de la surface des objets mesurés ou des trajectoires de déplacement de rotors dans des paliers lisses, sont interprétées.

17. Procédé selon la revendication 14, **caractérisé en ce que** la mesure des données d'état à long terme est seulement réalisée dans des états opérationnels de navire et des états opérationnels du dispositif de navire concerné définis.

18. Procédé selon l'une des revendications 12 à 17, **caractérisé en ce que** dans le cas d'une dégradation de l'état d'une installation du dispositif qui se produit pendant le déplacement du navire, un pronostic du développement de la dégradation au cours du prochain temps est réalisé par des analyses de tendance à partir des données d'état collectées afin d'évaluer la durée de vie restante de l'installation jusqu'à la panne.

19. Procédé selon la revendication 14, **caractérisé en ce qu'**un diagnostic à long terme du dispositif de navire est réalisé avant une révision du navire avec les données d'état collectées dans le cadre de la revendication 17, de sorte qu'il soit possible d'estimer si des travaux de maintenance ou de réparation doivent être réalisés au niveau d'une installation observée du dispositif du navire, si l'installation doit être remplacée ou si elle peut continuer de fonctionner sans intervention jusqu'à la prochaine révision.

20. Procédé selon l'une des revendications 12 à 19, **caractérisé en ce qu'**une analyse d'état d'une installation de navire du dispositif de navire est réalisée en deux étapes de telle sorte que dans une première étape en série des valeurs principales des spectres du bruit de structure ou ambiant ou de l'orbite de l'installation de navire sont examinées en vue de détecter des signes de dommage et, dans une deuxième étape sélective, une grille de fréquences des fréquences d'excitation possibles est formée à partir des données constructives et/ou opérationnelles de l'installation, dans l'environnement de laquelle la recherche de signes de dommage est poursuivie et affinée.

21. Procédé selon l'une des revendications 12 à 20, **caractérisé en ce que** des spectres de vitesse d'oscillation sont interprétés.

22. Procédé selon l'une des revendications 12 à 21, **caractérisé en ce que** des capteurs destinés à mesurer le bruit de structure et ambiant ainsi qu'à mesurer des orbites sont utilisés et **en ce qu'**un dispositif d'interprétation est raccordé à un système d'automatisation et d'information du navire.
